# EUROPEAN PATENT SPECIFICATION

(11) **EP 3 194 216 B1**
(45) Date of publication and mention of the grant of the patent: **17.04.2024**
(21) Application number: 15760556.9
(22) Date of filing: 24.08.2015
(51) Int. Cl.: H01M 50/24, H01M 50/262, H01M 50/282, H01M 10/625, H01M 10/647, H01M 10/658, H01M 10/613

(54) **FLEXIBLE BATTERY COVER WITH INTEGRAL LID, METHOD OF CONSTRUCTION THEREOF, AND METHOD OF ENCLOSING A BATTERY THEREWITH**
FLEXIBLE BATTERIEABDECKUNG MIT INTEGRALEM DECKEL, VERFAHREN ZUR KONSTRUKTION DAVON UND VERFAHREN ZUM SCHLIESSEN EINER BATTERIE DAMIT
COUVERCLE DE BATTERIE SOUPLE AVEC CAPOT INTÉGRÉ, PROCÉDÉ DE FABRICATION ASSOCIÉ, ET PROCÉDÉ D'ENFERMEMENT D'UNE BATTERIE AVEC CELUI-CI

(30) Priority: 29.08.2014 US 201462043969 P
(43) Date of publication of application: 26.07.2017
(73) Proprietor: Federal-Mogul Powertrain LLC, Southfield, MI 48034 (US)
(72) Inventor: BURDY, John E., Elverson, PA 19520 (US); ROWCOTSKY, Daniel A., Dresher, PA 19025 (US); PINKOW, Christopher J., Garnet Valley, PA 19060 (US)
(74) Representative: HGF
(86) International application number: PCT/US2015/046511
(87) International publication number: WO 2016/032945

(56) References cited:
- EP-A2- 2 323 193
- CN-U- 203 225 283
- DE-A1- 10 061 643
- GB-A- 2 213 981
- JP-U- S58 110 976
- US-A- 2 707 721
- US-A- 4 255 502
- US-A- 4 535 863
- US-A- 4 738 906
- US-A- 6 010 804
- US-A1- 2003 047 364
- US-A1- 2010 147 918
- US-B1- 7 301 303

## Description

### BACKGROUND OF THE INVENTION

### 1. Technical Field

This invention relates generally to battery covers, and more particularly to flexible, insulative battery covers.

### 2. Related Art

A thermal insulator is generally needed to insulate a battery, such as a vehicle battery, from thermal degradation. Rigid plastic covers are commonly used to protect batteries; however, they are relatively heavy, and in addition, typically do not protect a battery against thermal conditions. Accordingly, rigid plastic covers generally do not provide the degree of insulation required to protect the battery against thermal degradation, thereby allowing the useful life of the battery to be reduced. In addition, rigid plastic battery covers are inflexible, generally bulky and cumbersome to ship, and in addition, occupy valuable storage space, thereby increasing shipping and inventory cost.

In addition to rigid plastic covers, generally tubular, nonwoven mats are also used to cover the sides of batteries, wherein the nonwoven mats having open ends, thereby leaving the bottom and top of the battery exposed to environmental conditions. In addition, it is known to cover a top of the battery with a separate piece of material, however, this introduces significant added cost, as a plurality of fasteners are needed to secure the separate piece of material to the nonwoven mat surrounding the sides of the battery. In addition, further cost is added due to the need to inventory separate battery cover components, including the separate pieces of baiter cover materials, as well as the fasteners. US 4255502 discloses a flexible, fabric cover for automobile batteries. JP S58 110976 U discloses a vehicle battery cover with a tubular member and a lid comprising several fasteners attached to the end of the lid configured to engage with outer parts of the tubular member.

### SUMMARY OF THE INVENTION

According to one aspect of the invention, a flexible, insulative battery cover is provided as defined in the appended claims. The cover includes a flexible, tabular textile wall having a cavity extending between a bottom end and an open top end of the wall. The cover further includes a flexible textile lid having a free end and an opposite end attached to the wall via a hinge, with the lid being pivotal via the hinge between an open position, exposing the open top end of the wall, and a closed position, substantially closing off the top end. Further yet, the cover includes a fastener fixed to the lid adjacent the free end, with the fastener being configured for releasable attachment to an elongate fastener member of the vehicle battery assembly.

The textile wall and lid may include an intermediate nonwoven layer sandwiched between opposite nonwoven scrim layers.

The nonwoven scrim layers may be spun bond layers.

The spun bond layers may be constructed at least in part from heat-meltable fibers.

The lid may have a pair of openings, with one of the openings being adjacent the fixed end of the lid and the other of the openings being adjacent the free end of the lid.

In accordance with another aspect of the invention, a vehicle battery and insulative cover assembly is provided as defined in the appended claims. The assembly includes a pair of elongate fastener members and an elongate clamp bracket having openings configured for receipt of the fastener members therethrough. The assembly further includes a flexible, tubular textile wall having a cavity extending between a bottom end and an open top find of the wall. A flexible textile lid having a free end and an opposite end is attached to the wall via a hinge. The lid is pivotal via the hinge between an open position, exposing the open top end of the wall, and a closed position, substantially closing off the. Further, a fastener is fixed to the lid adjacent the free end. The fastener is configured for releasable attachment to one of the elongate fastener members, thereby releasably maintaining the lid in the closed position to provide optimal protection to the enclosed battery.

In accordance with another aspect of the invention, a method of constructing a battery cover for a vehicle batter assembly is provided as defined in the appended claims. The method includes forming a flexible, tubular textile wall to provide a cavity extending between & bottom end and an open top end of the wall. Further, providing a flexible textile lid having a free end and an opposite end attached to the wall via a hinge, with the lid being pivotal via the hinge between an open position, exposing the open top end of the wall, and a closed position, substantially closing off the top end. Further yet, fixing a fastener to the lid adjacent the free end of the lid, with the fastener being configured to for releasable attachment to an elongate fastener member of the vehicle battery assembly.

In accordance with another aspect of the invention, a method of enclosing a battery in a battery cover is provided as defined in the appended claims. The method includes providing a flexible one piece, insulative battery cover. The cover is provided including a flexible, circumferentially continuous textile wall bounding a cavity that extends between a bottom end of the wall and an open top end of the wall. The cover further includes a flexible textile lid, wherein the lid is hingedly attached to the wall at a fixed end and extends to a free end opposite the fixed end. The cover is further provided with a fastener adjacent the free end. The method further includes disposing a battery in the cavity, and extending fastener members, such as J-hooks, along opposite outer sides of the wall. Then, the method further includes folding the lid from an open position to a closed position, whereupon the fastener members extend through corresponding openings in the lid of the cover. Then, the method includes operably fastening the fastener to one of the fastener members to substantially close the top end of the cover to fully conceal the battery within the cavity. Then, a bracket can be disposed on the fastener members and fastened thereto to fix the enclosed battery to the vehicle.

### BRIEF DESCRIPTION OF THE DRAWINGS

These and other aspects, features and advantages of the present invention will become more readily appreciated when considered in connection with the following detailed description of presently preferred embodiments and best mode, appended claims and accompanying drawings, in which:
Figure 1 is a perspective view of a one piece, insulative battery cover constructed in accordance with one aspect of the invention shown with a lid of the cover in an open position with a battery disposed in a cavity of the cover;
Figure 2 is perspective view of the battery cover of Figure 1 shown disposed within a vehicle in a dosed position with a clamp member fastened to a pair of fastener member J-hooks;
Figure 3A is a plan view of a flat sheet of material formed into a predetermined configuration, in accordance with one aspect of the invention, with the material shown in an initial fabrication state prior to folding portions of the material into a batter cover;
Figure 3B is a view similar to Figures 3 A of a flat sheet of material formed into a predetermined configuration, in accordance with another aspect of the invention, with the material shown in an initial fabrication state prior to folding portions of the material into a batter cover; and
Figure 4 is a cross-sectional view taken generally along the line 4-4 of Figure 2 showing a fastener of the battery cover fastened to one of the fastener member J-hooks.

### DETAILED DESCRIPTION OF PRESENTLY PREFERRED EMBODIMENTS

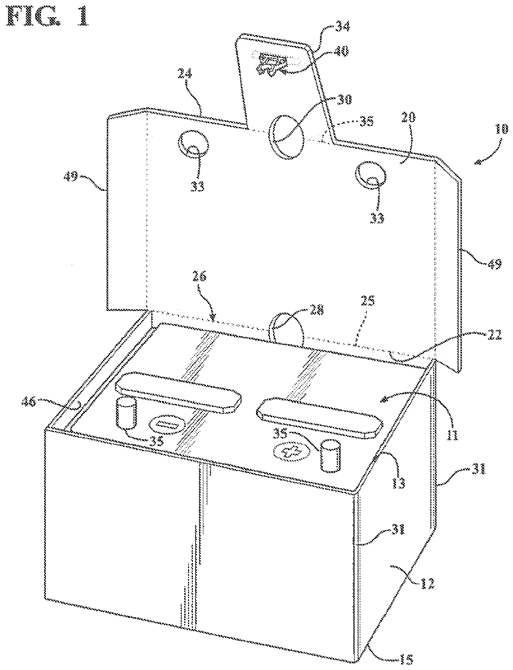

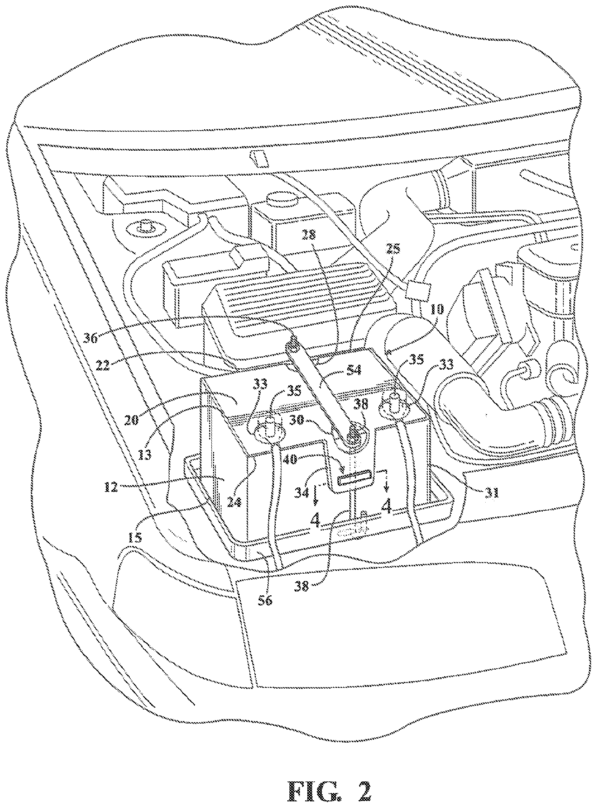

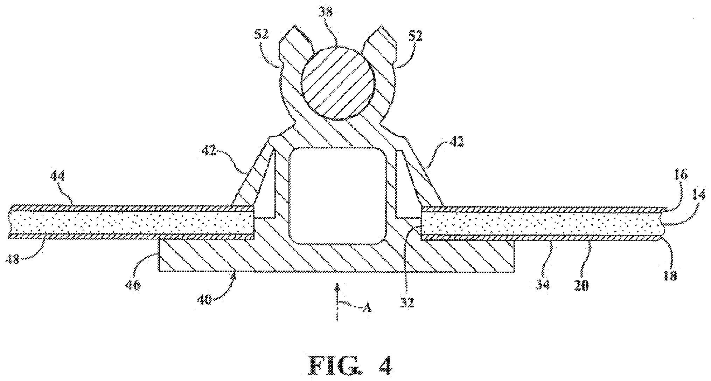

Referring in more detail to the drawings, Figures 1 and 2 illustrates a one-piece flexible, textile battery cover, referred to hereafter as cover 10, constructed in accordance with one aspect of the invention shown disposed about a vehicle battery 11 to form an assembly providing thermal protection about the peripheral sides and top of the battery 11, The cover 10 is formed having a flexible, one-piece wall 12, such that the cover 10 can be handled and disposed about the battery 11 as a single piece of material. The wall 12 is formed having tubular configured sidewalls, and thus, is circumferentially continuous about its peripheral sides and extends between a top end 13 and an opposite bottom end 15. The wall 12, as best shown in Figure 4, has a nonwoven intermediate layer 14 to provide the desired thermal protection, and further includes opposite outer layers 16, 18 sandwiching the intermediate layer 14 therebetween. The cover 10 further includes a flexible textile top, also referred to as lid 20. The lid 20 is fixed to the wall 12 adjacent the top end 13 of the wall 12 at a fixed end 22 of the lid 20, wherein the lid 20 extends to a free end 24 opposite the fixed end 22. The lid 20 is operable to fold, such as via a living hinge 25 (understood in the art to be an integral hinge formed in the material itself, such as via a creased or reduced thickness region, for example), over the open top end 13 of the wall 12, thereby closing the open top end 13 to fully cover the battery 11 within a cavity 26 of the cover 10 and provide complete, enhanced and optimal thermal protection to the battery 11, while at the same time providing fall and completely encapsulated protection to the battery 11 against environmental elements, e.g. fluids and debris contaminants. With the entirety of the fabric forming the cover 10 being highly flexible, the cover 10 is able to be readily compacted or generally flattened for shipping and storage purposes, thereby occupying minimal space in shipping and storage, which ultimately results in reduced shipping and storage costs. Further, the cover is lightweight, thereby minimizing the weight added by the cover 10 to the vehicle. In addition, the cover 10 is readily renewable, and thus, reduces the impact on landfills, and is economical in manufacture and installation.

The intermediate layer 14 can be constructed from green materials, with the green materials being provided from at least one of a blend of comminuted cardboard, natural fibers, recycled materials and/or waste stream materials, and can further include heat-settable fibers and/or heat-meltable textile fibers. The natural fibers can be provided from any suitable natural fibers, such as jute, kenaf, hemp and the like, and also from any suitable recycled materials and/or waste stream materials. The green materials can also be provided as any mixture of Asian (an inferior grade of cardboard commonly produced in Asian countries, e.g. China and Korea and shipped into the U.S., which is typically considered non-recyclable by various state environment agencies heretofore, such as in Connecticut, New Hampshire and Massachusetts) and standard cardboard material (that made from wood, such as pine, which is typical in the U.S.). Because recyclers typically allow only 5% Asian cardboard mixed with the "Standard Cardboard", the focus of this patent is on recycled cardboard with between 5% and 100% Asian cardboard. This "Standard" and "Asian" mixture will hereafter be referred to as "mixed Asian cardboard". As such, a method of recycling cardboard materials for use in manufacturing vehicle components, in accordance with one aspect of the invention, negates the need to separate inferior, low-grade cardboard materials, including Asian cardboard, from higher grade cardboard, such as that manufactured in the U.S. Accordingly, **piles,** bundles, or mixtures of standard high grade cardboard material from cardboard containers can be readily recycled in combination with the Asian cardboard without concern of separating the two types of cardboard materials from one another. The content of the cardboard, whether mixed or 100% Asian, is preferably between about 25-99 weight percent of the total web weight, depending on the desired characteristics of the cover 10, as desired. Generally, about 25% recycled material in a new product is needed in order to be considered a "Recycled" product.

If heat-meltable and/or heat-settable material is included in the textile intermediate layer 14, it can be provided, for example, as a low temperature melt polymeric material, such as fibers of polyethylene, PET or Nylon, It should be recognized that other low melt polymeric materials could be used, such as thermoplastic bi-component fibers whose outer sheath, such as polypropylene, for example, melts when heated above its melting point, while the inner core can be a heat-settable material than retains a heat-set shape. The low melt material, when melted, fuses with the mixture of any textile natural fibers present and the cardboard fibers and with remaining binders from the recycled cardboard materials. As an example, the melting point of the outer portion of a PET low melt bi-component fiber may be approximately 110°C - 180°C as compared to the core melting at 250°C. Persons skilled in the art will recognize that other coatings or fillers and filler fibers may be used in place of low melt fibers to achieve the desired result.

The heat-meltable and thermally bondable textile material is provided having a suitable wt% content of the wall 12, such as about 10 wt% or more, by way of example and without limitation, to allow any free edges of the wall 12, such as side edges, to be bonded to one another to form the wall having welded seams, and the desired configuration, shown here, by way of example and without limitation, as being generally rectangular. It should be recognized that the wt% of heat-meltable material could be less than 10%, depending on the materials and bonding process used. The heat-meltable fibers are preferably provided from recycled plastic materials, such as recycled carpet or shredded PET rags, for example. Accordingly, the use of these recycled materials reduces the amount of materials being sent to landfills.

The process for constructing the nonwoven textile intermediate layer 14 includes mixing or blending the nonwoven materials, which as discussed, can include green materials, e.g. natural fibers, with the heat-meltable fibers and forming a web of the blended materials. The webbing process, which may be performed in an air-lay process, for example, on a Rando machine, or in a carding process, forms a homogenously mixed natural fiber/meltable fiber mat or web, with the green material and fibers being randomly oriented.

Then, upon forming the web, the web is consolidated to bind the green and fibrous materials to one another, such as via a mechanical, chemical and/or thermal process. For example, the web can be heated, such as in an oven, to a temperature suitable to at least partially melt the heat-meltable fibers, thereby thermally bonding the blend of green materials with the heat-meltable fibers. Otherwise, or in addition, the web can be subjected to a needling process to entwine the green materials and fibers with one another and/or to a chemical process wherein a chemical binder is utilized to bond the green materials and fibers together. Regardless of the consolidating process selected, the web is formed into a nonwoven sheet of intermixed and intertwined fibers, wherein the nonwoven sheet attains a desired thickness.

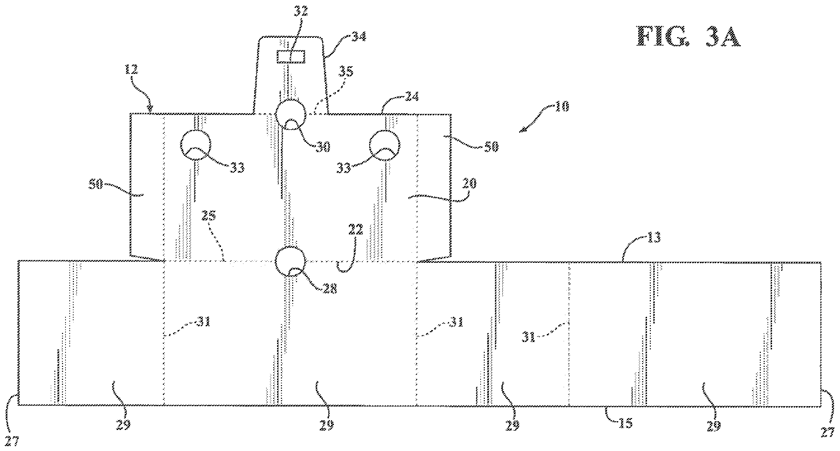

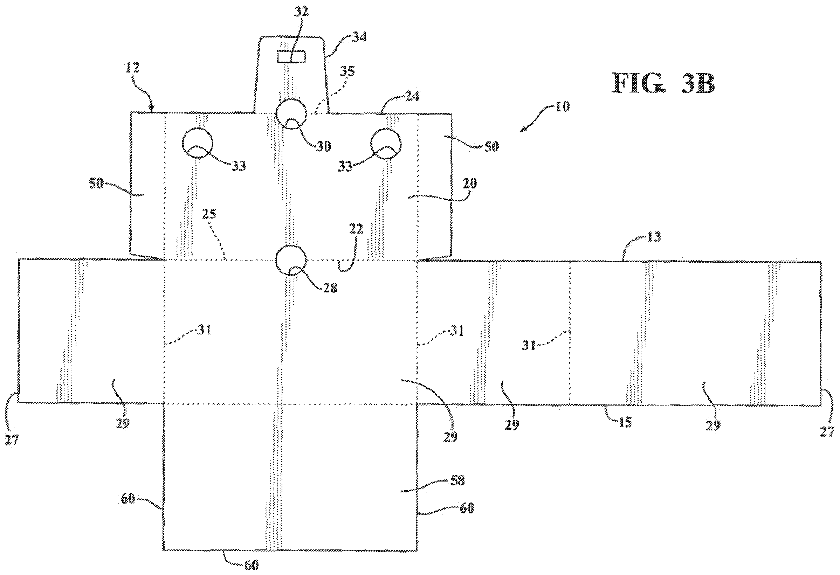

Then, upon forming and cooling the nonwoven sheet 14, the outer layers 16, 18 can be bonded to the opposite sides of the intermediate layer 14 to complete the formation of the material of the wall 12. The outer layers 16, 18 can be formed of any suitable material desired to provide protection to the battery 11 against environmental elements, including engine fluids and water. As such, the outer layers 16, 18 can be provided as fluid impervious or substantially impervious layers of material, such as from scrim layers of nonwoven material, wherein the outer layers 16, 18 can be formed as relatively thin spun bond layers, as compared to the thicker intermediate layer 14. By way of example and without limitation, the outer layers 16, 18 can be formed, at least in part, from polypropylene. Then, upon completing construction of the wall material, the wall material can be cut to form the desired size, single, monolithic piece of material that forms the desired configuration of the wall 12, such as shown in Figures 3A and 3B, by way of example and without limitation. Then, sides 29 of the planar wall of material are folded appropriately, such as via living side hinges 31, whereupon any free edges needing to be fixed to one another are brought into abutting relation with one another. The free edges brought into abutment with one another are readily fixed to one another under, such as via bonding under the application of suitable heat, e.g. welded, such as in an ultrasonic welding process, or by a suitable adhesive or fastener, for example, By way of example and without limitation, side edges 27 of the wall 12 can be fixed to one another via one of the aforementioned fixation mechanisms to form a circumferentially continuous, tubular wall structure of the cover 10 bounding the cavity 26. As such, the wall 12 is configured having its circumferentially continuous peripheral sides 29 extending between the opposite top and bottom ends 13, 15, wherein at least the top end 13 is open to allow disposal of the battery into the cavity 26. It is contemplated herein that the lid 20 could be cut as a single, monolithic piece of material with the peripheral sidewalls 29, as shown in Figures 3A and 3B, or, the lid 20 could be cut as a separate piece of material, and then fixed to one of the upper edges of a sides 29 to form the fixed end 22, such as discussed above, namely, via one of the aforementioned fixation mechanisms, by way of example and without limitation.

Upon forming the overall planar geometry of the wall 12, including the lid 20, a plurality of through openings 28, 30, 32, 33 are formed in the wall 12, such as in a cutting operation, and are shown as being formed, at least in part, in the lid 20, for example, Of course, if the lid 20 is constructed separately from the wall 12, the openings 28, 30, 32 can be formed in the lid 20 prior to fixing the lid 20 to the wall 12, One of the openings 28 is adjacent the hinge 25 at the fixed end 22 and another opening 30 is adjacent the opposite free end 24. Further yet, another opening 32 is formed in an extension portion, also referred to as closure flap 34, of the lid 20. The flap 34 is shown having a reduced width relative to the full width of the lid 20, by way of example, such that the flap 34 extends outwardly from the free end 24. Upon closing the lid 20, the closure flap 34 is foldable, such as via a living hinge 35, to extend along one of the peripheral sides 29 of the wall 12 to facilitate fastening and maintaining the lid 20 in its closed position. The opening 28 adjacent the fixed end 22 of the lid 20 is provided to allow a first elongate fastener member, such as an elongate bolt member or J-hook 36 (known term in the art of vehicle batteries to identify a generally J-shaped fastener, rod or bolt having a J-shaped end configured to loop under the battery or support platform thereof and an opposite, straight threaded end configured for receipt of a threaded nut), to extend therethrough, while the opening 30 adjacent the opposite free end 24 is provided to allow a second elongate fastener member, such as another J-hook 38, to extend therethrough, Accordingly, it should be recognized that the J-hooks 36, 38 run along opposite sides of the cover 10 and battery 11. The openings 33 are provided to accommodate battery terminals 35, such that the terminals 35 are free to pass through the cover 10 in a close fit. It should be recognized that the openings 33 could be provided in a location outer than as shown, depending on the intended use. Meanwhile, as shown in Figure 4, the opening 32 is provided to facilitate attaching a fastener 40 to the closure flap 34. It should be recognized that the fastener 40 could be fixed to the closure flap 34 without an opening, such as via adhesive bonding, though, this would require additional processes and bonding materials. Accordingly, the mechanism shown in Figure 4 is preferred, as the fastener 40 can simply be disposed in snap-fit fashion into the opening 32 along the direction of arrow A, whereupon a pair of spring members or spring fingers 42 function to retain the fastener 40, shown as a spring clip style fastener, in place. The fingers 42, upon being compressed radially inwardly and pressed through the opening 32, automatically expand radially outwardly into snap-fit abutment with an inwardly facing side surface 44 of the wall 12 and a flange 46 of the one piece fastener 40 is pressed against an outwardly facing side surface 48 of the wall 12. Accordingly, no extra materials or processes, other than pressing spring fingers 42 of the fastener 40 through the opening 32, are required to fix the fastener 40 to the closure flap 34.

Upon completing construction of the cover 10, the battery 11 is placed into the cavity 26 and the J-hooks 36, 38 are placed to extend along opposite sides 29 of the wall 12, Then, the lid 20 is folded about the living hinge 25 over the open top end 13 to cover and conceal the battery 11, whereupon portions of the J-hooks 36, 38 are guided through their respective openings 28, 30 in the lid 20. Further, as shown in Figure 1, while closing the lid 20, side flaps 49 of the lid 20, if provided for added protection, can be disposed inwardly of opposite sides 29 of the wall 12 to provide added protection to the battery 11. Then, the fastener 40, facing inwardly toward the wall 12, is able to be simply and readily fastened via clipped action to the J-hook 38 via spring clip fingers 52, as shown in Figure 4. Accordingly, assembly of the cover 10, including the lid 20, provides complete coverage about outwardly and upwardly exposed areas of the battery 11, with the bottom of the battery 11 being shielded by shelf 56 upon which the battery 11 rests, with only a single fastener 40 being needed to fix the cover 10 about the battery 11. Of course, the cover 10 can be formed with an integral bottom 58 formed as a monolithic piece of material with the remaining portion of the cover, as shown in Figure 3B, where the bottom 58 can have side edges 60, with at least one or all of the side edges 60 being fixed, such as being bonded via welded seams, as discussed above, by way of example and without limitation, to abutting bottom ends 15 of the sides 29, With the battery 11 being fully enclosed in the cover 10, the remaining installation of the battery 11 with the vehicle can be completed by fastening a standard elongate battery clamp bracket 54 having openings configured for receipt of upper ends of the fastener members 36, 38 therethrough, wherein the bracket 54 generally extends across the width of the battery, whereupon threaded nuts are threaded to the upper end of the J-hooks 36, 38 to press the bracket 54 downwardly, as is known, against the lid 20 of the cover 10, thereby completing the cover-battery assembly.

Obviously, many modifications and variations of the present invention are possible in light of the above teachings, It is, therefore, to be understood that within the scope of the appended claims and any claims ultimately allowed, the invention may be practiced otherwise than as specifically described.

## Claims

1. A vehicle battery and insulative cover assembly, comprising;
a flexible, tubular textile wall (12) having a cavity (26) extending between a bottom end (15) and an open top end (13) of said wall (12);
a flexible textile lid (20) having a free end (24) and an opposite end (22) attached to said wall via a hinge (25), said lid (20) being pivotal via said hinge (25) between an open position, exposing said open top end (13) of said wall (12), and a closed position, substantially closing off said top end (13);
**characterized by**
a pair of elongate fastener members (36, 38); an elongate clamp bracket (54) having openings configured for receipt of said fastener members therethrough; and
a fastener (40) fixed to said lid (20) adjacent said free end (24), said fastener (40) being configured for releasable attachment to one of said elongate fastener members (36, 38).

2. The assembly of claim 1 wherein said wall (12) and said lid (20) are a monolithic piece material with said hinge (25) being a living hinge (25).

3. The assembly of claim 2 wherein said wall (12) and said lid (20) having a nonwoven intermediate layer sandwiched between substantially impervious outer layers.

4. The assembly of claim 1 wherein said wall (12) has a plurality of through openings (28, 30), a first of said openings (28, 30) being adjacent said hinge (25) and a second of said openings (28, 30) being adjacent said free end (24), wherein said first and second openings (28, 30) are configured for receipt of separate ones of said elongate fastener members (36, 38) therethrough.

5. The assembly of claim 1 wherein said lid (20) has a flap (34) foldable to extend along a side of said tubular wall (12) via a living hinge (35), said fastener (40) being fixed to said flap (34).

6. The assembly of claim 1 wherein said fastener (40) has spring clip fingers (52) for snapping attachment to said one of said elongate fastener members (36, 38).

7. The assembly of claim 1 wherein said lid (20) has a pair of side flaps (50) configured for receipt in said cavity (26) inside said wall (12).

8. A flexible, insulative battery cover (10) for use in a vehicle battery and insulative cover assembly according to claim 1, the cover (10) comprising:
a flexible, tubular textile wall (12) having a cavity (26) extending between a bottom end (15) and an open top end (13) of said wall (12);
a flexible textile lid (20) having a free end (24) and an opposite end (22) attached to said wall via a hinge (25), said lid (20) being pivotal via said hinge (25) between an open position, exposing said open top end (13) of said wall (12), and a closed position, substantially closing off said top end (13);
**characterized by**
a fastener (40) fixed to said lid (20) adjacent said free end (24),
wherein said wall (12) has a plurality of through openings (28, 30) including a first opening (28) adjacent said hinge (25) and a second opening (30) adjacent said free end (24), said first and second openings being configured for receipt therethrough of a separate elongate fastener member of the vehicle battery and insulative cover assembly, said fastener (40) being configured for releasable attachment to the elongate fastener member (38) that is received by the second opening (30).

9. The flexible, insulative battery cover (10) of claim 8, wherein said wall (12) and said lid (20) are a monolithic piece material, with said hinge (25) being a living hinge.

10. This flexible, insulative battery cover (10) of claim 9, wherein said wall (12) and said lid (20) having a nonwoven intermediate layer (14) sandwiched between substantially fluid impervious outer layers (16, 18).

11. The flexible, insulative battery cover (10) of claim 8, wherein said lid (20) has a flap (34) foldable to extend along a side of said tubular wall (12) via a living hinge (25), said fastener (40) being fixed to said flap.

12. The flexible, insulative battery cover (10) of claim 8, wherein said fastener (40) has spring clip fingers (52) for snapping attachment to the elongate fastener member (38).

13. The flexible, insulative battery cover (10) of claim 8, wherein said lid (20) has a pair of side flaps (49) configured for receipt in said cavity (26) inside said wall (12).

## Patentansprüche

1. Fahrzeugbatterie und isolierende Abdeckungsbaugruppe, umfassend;
eine flexible, schlauchförmige Textilwand (12) mit einem Hohlraum (26), der sich zwischen einem unteren Ende (15) und einem offenen oberen Ende (13) der Wand (12) erstreckt;
einen flexiblen Textildeckel (20) mit einem freien Ende (24) und einem gegenüberliegenden Ende (22), das über ein Scharnier (25) an der Wand angebracht ist, wobei der Deckel (20) über das Scharnier (25) zwischen einer offenen Position, die das offene obere Ende (13) der Wand (12) freilegt, und einer geschlossenen Position schwenkbar ist, in der das obere Ende (13) im Wesentlichen verschlossen ist; **gekennzeichnet durch**
ein Paar länglicher Befestigungselemente (36, 38); eine längliche Klemmhalterung (54) mit Öffnungen, die zur Aufnahme der Befestigungselemente dadurch konfiguriert sind; und
ein Befestigungsmittel (40), das benachbart zu dem freien Ende (24) an dem Deckel (20) befestigt ist, wobei das Befestigungsmittel (40) zur lösbaren Anbringung an einem der länglichen Befestigungselemente (36, 38) konfiguriert ist.

2. Baugruppe nach Anspruch 1, wobei die Wand (12) und der Deckel (20) aus einem monolithischen Materialstück bestehen und das Scharnier (25) ein bewegliches Scharnier (25) ist.

3. Baugruppe nach Anspruch 2, wobei die Wand (12) und der Deckel (20) eine Zwischenschicht aus Vliesstoff aufweisen, die zwischen im Wesentlichen undurchlässigen Außenschichten eingefügt ist.

4. Baugruppe nach Anspruch 1, wobei die Wand (12) eine Vielzahl von Durchgangsöffnungen (28, 30) aufweist, wobei eine erste der Öffnungen (28, 30) benachbart zu dem Scharnier (25) liegt und eine zweite der Öffnungen (28, 30) benachbart zu dem freien Ende (24) liegt, wobei die erste und zweite Öffnung (28, 30) zur Aufnahme einzelner der länglichen Befestigungselemente (36, 38) dadurch konfiguriert sind.

5. Baugruppe nach Anspruch 1, wobei der Deckel (20) eine Klappe (34) aufweist, die faltbar ist, um sich über ein bewegliches Scharnier (35) entlang einer Seite der schlauchförmigen Wand (12) zu erstrecken, wobei das Befestigungsmittel (40) an der Klappe (34) befestigt ist.

6. Baugruppe nach Anspruch 1, wobei das Befestigungsmittel (40) Federklammerfinger (52) zur Schnappanbringung an dem einen der länglichen Befestigungselemente (36, 38) aufweist.

7. Baugruppe nach Anspruch 1, wobei der Deckel (20) ein Paar Seitenklappen (50) aufweist, die zur Aufnahme in dem Hohlraum (26) innerhalb der Wand (12) konfiguriert sind.

8. Flexible, isolierende Batterieabdeckung (10) zur Verwendung in einer Fahrzeugbatterie und einer isolierenden Abdeckungsbaugruppe gemäß Anspruch 1, wobei die Abdeckung (10) Folgendes umfasst:
eine flexible, schlauchförmige Textilwand (12) mit einem Hohlraum (26), der sich zwischen einem unteren Ende (15) und einem offenen oberen Ende (13) der Wand (12) erstreckt;
einen flexiblen Textildeckel (20) mit einem freien Ende (24) und einem gegenüberliegenden Ende (22), das über ein Scharnier (25) an der Wand angebracht ist, wobei der Deckel (20) über das Scharnier (25) zwischen einer offenen Position, die das offene obere Ende (13) der Wand (12) freilegt, und einer geschlossenen Position schwenkbar ist, in der das obere Ende (13) im Wesentlichen verschlossen ist;
**gekennzeichnet durch**
ein Befestigungsmittel (40), das benachbart zu dem freien Ende (24) an dem Deckel (20) befestigt ist,
wobei die Wand (12) eine Vielzahl von Durchgangsöffnungen (28, 30) aufweist, einschließlich einer ersten Öffnung (28) benachbart zu dem Scharnier (25) und einer zweiten Öffnung (30) benachbart zu dem freien Ende (24), wobei die erste und zweite Öffnung zur Aufnahme eines separaten länglichen Befestigungselements der Fahrzeugbatterie und der isolierenden Abdeckungsbaugruppe dadurch konfiguriert sind, wobei das Befestigungsmittel (40) zur lösbaren Anbringung an dem länglichen Befestigungselement (38) konfiguriert ist, das durch die zweite Öffnung (30) aufgenommen ist.

9. Flexible, isolierende Batterieabdeckung (10) nach Anspruch 8 wobei die Wand (12) und der Deckel (20) aus einem monolithischen Materialstück bestehen und das Scharnier (25) ein bewegliches Scharnier ist.

10. Flexible, isolierende Batterieabdeckung (10) nach Anspruch 9, wobei die Wand (12) und der Deckel (20) eine Zwischenschicht (14) aus Vliesstoff aufweisen, die zwischen im Wesentlichen flüssigkeitsundurchlässigen Außenschichten (16, 18) eingefügt ist.

11. Flexible, isolierende Batterieabdeckung (10) nach Anspruch 8, wobei der Deckel (20) eine Klappe (34) aufweist, die faltbar ist, um sich über ein bewegliches Scharnier (25) entlang einer Seite der schlauchförmigen Wand (12) zu erstrecken, wobei das Befestigungsmittel (40) an der Klappe befestigt ist.

12. Flexible, isolierende Batterieabdeckung (10) nach Anspruch 8, wobei das Befestigungsmittel (40) Federklammerfinger (52) zur Schnappanbringung an dem länglichen Befestigungselement (38) aufweist.

13. Flexible, isolierende Batterieabdeckung (10) nach Anspruch 8, wobei der Deckel (20) ein Paar Seitenklappen (49) aufweist, die zur Aufnahme in dem Hohlraum (26) innerhalb der Wand (12) konfiguriert sind.

## Revendications

1. Ensemble batterie de véhicule et couvercle isolant, comprenant :
une paroi textile tubulaire souple (12) comportant une cavité (26) s'étendant entre une extrémité inférieure (15) et une extrémité supérieure ouverte (13) de ladite paroi (12) ;
un capot textile souple (20) comportant une extrémité libre (24) et une extrémité opposée (22) fixée à ladite paroi par l'intermédiaire d'une charnière (25), ledit capot (20) pouvant pivoter par l'intermédiaire de ladite charnière (25) entre une position ouverte, exposant ladite extrémité supérieure ouverte (13) de ladite paroi (12), et une position fermée, fermant sensiblement ladite extrémité supérieure (13) ; **caractérisé par**
une paire d'éléments de fixation allongés (36, 38) ; une ferrure de serrage allongée (54) comportant des ouvertures conçues pour recevoir lesdits éléments de fixation à travers celles-ci ; et
un dispositif de fixation (40) fixé audit capot (20) adjacent à ladite extrémité libre (24), ledit dispositif de fixation (40) étant conçu pour une fixation amovible à l'un desdits éléments de fixation allongés (36, 38).

2. Ensemble de la revendication 1, ladite paroi (12) et ledit capot (20) étant un matériau de pièce monolithique, ladite charnière (25) étant une charnière de pliage (25).

3. Ensemble de la revendication 2, ladite paroi (12) et ledit capot (20) comportant une couche intermédiaire non tissée intercalée entre des couches externes sensiblement imperméables.

4. Ensemble de la revendication 1, ladite paroi (12) comportant une pluralité d'ouvertures traversantes (28, 30), une première desdites ouvertures (28, 30) étant adjacente à ladite charnière (25) et une seconde desdites ouvertures (28, 30) étant adjacente à ladite extrémité libre (24), lesdites première et seconde ouvertures (28, 30) étant conçues pour recevoir des éléments de fixation allongés séparés parmi lesdits éléments de fixation allongés (36, 38) à travers elles.

5. Ensemble de la revendication 1, ledit capot (20) comportant un rabat (34) pliable pour s'étendre le long d'un côté de ladite paroi tubulaire (12) par l'intermédiaire d'une charnière de pliage (35), ledit dispositif de fixation (40) étant fixé audit rabat (34).

6. Ensemble de la revendication 1, ledit dispositif de fixation (40) comportant des doigts (52) d'attache à ressort en vue d'une fixation par encliquetage audit un desdits éléments de fixation allongés (36, 38).

7. Ensemble de la revendication 1, ledit capot (20) comportant une paire de rabats latéraux (50) conçus pour être reçus dans ladite cavité (26) à l'intérieur de ladite paroi (12).

8. Couvercle de batterie souple isolant (10) destiné à être utilisé dans un ensemble batterie de véhicule et couvercle isolant selon la revendication 1, le couvercle (10) comprenant :
une paroi textile tubulaire souple (12) comportant une cavité (26) s'étendant entre une extrémité inférieure (15) et une extrémité supérieure ouverte (13) de ladite paroi (12) ;
un capot textile souple (20) comportant une extrémité libre (24) et une extrémité opposée (22) fixée à ladite paroi par l'intermédiaire d'une charnière (25), ledit capot (20) pouvant pivoter par l'intermédiaire de ladite charnière (25) entre une position ouverte, exposant ladite extrémité supérieure ouverte (13) de ladite paroi (12), et une position fermée, fermant sensiblement ladite extrémité supérieure (13) ; **caractérisé par**
un dispositif de fixation (40) fixé audit capot (20) adjacent à ladite extrémité libre (24),
ladite paroi (12) comportant une pluralité d'ouvertures traversantes (28, 30) comprenant une première ouverture (28) adjacente à ladite charnière (25) et une seconde ouverture (30) adjacente à ladite extrémité libre (24), lesdites première et seconde ouvertures étant conçues pour recevoir à travers elles un élément de fixation allongé séparé de l'ensemble batterie de véhicule et couvercle isolant, ledit dispositif de fixation (40) étant conçu pour une fixation amovible à l'élément de fixation allongé (38) qui est reçu par la seconde ouverture (30).

9. Couvercle de batterie souple isolant (10) de la revendication 8, ladite paroi (12) et ledit capot (20) étant un matériau de pièce monolithique, ladite charnière (25) étant une charnière de pliage.

10. Couvercle de batterie souple isolant (10) de la revendication 9, ladite paroi (12) et ledit capot (20) comportant une couche intermédiaire non tissée (14) intercalée entre des couches externes sensiblement imperméables aux fluides (16, 18).

11. Couvercle de batterie souple isolant (10) de la revendication 8, ledit capot (20) comportant un rabat (34) pliable pour s'étendre le long d'un côté de ladite paroi tubulaire (12) par l'intermédiaire d'une charnière de pliage (25), ledit dispositif de fixation (40) étant fixé audit volet.

12. Couvercle de batterie souple isolant (10) de la revendication 8, ledit dispositif de fixation (40) comportant des doigts (52) d'attache à ressort en vue d'une fixation par encliquetage à l'élément de fixation allongé (38).

13. Couvercle de batterie souple isolant (10) de la revendication 8, ledit capot (20) comportant une paire de rabats latéraux (49) conçus pour être reçus dans ladite cavité (26) à l'intérieur de ladite paroi (12).
